# DEMANDE DE BREVET EUROPEEN

(11) **EP 1 238 747 A1**
(43) Date de publication de la demande: **11.09.2002**
(21) Numéro de dépôt: 02290369.4
(22) Date de dépôt: 14.02.2002
(51) Int. Cl.: B23K 26/12, B23K 26/067

(54) **Procédé et installation de coupage laser avec optique à bifocales et gaz d'assistance à base d'hydrogène**

(30) Priorité: 09.03.2001 FR 0103265
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Matile, Olivier, 75018 Paris (FR)
(74) Mandataire: Pittis, Olivier

(57) **Abrégé**

Installation et procédé de coupage d'une pièce par mise en oeuvre d'un faisceau laser et d'un gaz d'assistance, dans lequel on utilise au moins un moyen optique pour focaliser le faisceau laser en plusieurs points de focalisation distincts l'un de l'autre, et dans lequel on utilise, en tant que gaz d'assistance dudit faisceau laser, un mélange gazeux contenant de l'hydrogène et au moins un gaz inerte. Le moyen optique est transparent ou réfléchissant et est choisi parmi les lentilles, les miroirs et leurs combinaisons, de préférence une lentille à bifocales. La pièce à couper est en acier inoxydable, en acier revêtu, en aluminium ou en alliage d'aluminium, en acier non allié ou en acier allié. Le gaz inerte est choisi parmi l'azote, l'argon, l'hélium et leurs mélanges.

## Description

La présente invention concerne un procédé de coupage par faisceau laser des aciers inoxydables, des aciers revêtus, de l'aluminium et de ses alliages, et des aciers non alliés, alliés et fortement alliés, qu'ils soient ferritiques ou austénitiques, utilisant une lentille ou un miroir à plusieurs focales pour focaliser le faisceau laser en au moins deux points de focalisation distincts l'un de l'autre et situés de préférence sur un même axe, et un mélange d'hydrogène et d'au moins un composé inerte, tel l'azote, en tant que gaz d'assistance du faisceau laser.

La découpe des aciers inoxydables, des aciers revêtus, de l'aluminium et des alliages d'aluminium, et des aciers non alliés, alliés et fortement alliés, qu'ils soient ferritiques ou austénitiques, se fait notamment par mise en oeuvre d'un faisceau laser et de l'azote ou de l'oxygène en tant que gaz d'assistance du faisceau laser, c'est-à-dire en tant que gaz de coupe.

Par ailleurs, il est connu que l'emploi d'azote en tant que gaz de coupe de ces matériaux conduit à des vitesses de coupe considérablement inférieures à celles obtenues avec de l'oxygène, typiquement inférieures de 30 à 60 %, et à des consommations de gaz élevées, typiquement supérieures de 30 à 600 % selon le matériau considéré.

Il a été montré, par ailleurs, notamment par le document EP-A-655021, que des mélanges d'azote et d'hydrogènes permettaient d'augmenter la vitesse de coupe lors du coupage par laser de pièces à usiner se présentant sous forme de bandes ou de plaques, notamment de tôles.

En d'autres termes, il est connu d'utiliser des mélanges du type azote/hydrogène en lieu et place de i'azote et ce, de manière à améliorer les performances du procédé de découpe laser par comparaison à une découpe laser sous azote pur.

Par ailleurs, le document EP-A-886555 propose d'utiliser des mélanges azote/hydrogène ou argon/hydrogène pour couper par laser à des vitesses inférieures à 10 m/min.

Partant de là, le problème qui se pose est d'améliorer encore les procédés de coupage par faisceau laser des aciers inoxydables, des aciers revêtus, de l'aluminium et des alliages d'aluminium, et des aciers non alliés, alliés et fortement alliés, qu'ils soient ferritiques ou austénitiques, de manière à augmenter la vitesse de découpe d'au moins 30 à 40 % par comparaison avec un procédé de coupage laser utilisant de l'azote pur et d'au moins 20 % par comparaison avec un procédé de coupage laser utilisant un mélange azote / hydrogène, toutes conditions étant égales par ailleurs.

De plus, un autre but de l'invention est d'augmenter les performances des procédés de coupage laser mais tout en maîtrisant, voire même en diminuant les quantités de gaz d'assistance consommées et ce, notamment dans le but d'optimiser les coûts globaux du procédé de coupe industriel utilisé.

Dit autrement, le but de l'invention est donc de proposer un procédé de coupage laser qui permet d'augmenter les performances de découpe et de limiter la consommation de gaz de coupe.

La présente invention concerne alors un procédé de coupage d'une pièce par mise en oeuvre d'un faisceau laser et d'un gaz d'assistance, dans lequel on utilise au moins un moyen optique pour focaliser le faisceau laser en plusieurs points de focalisation distincts l'un de l'autre, et dans lequel on utilise, en tant que gaz d'assistance dudit faisceau laser, un mélange gazeux contenant de l'hydrogène et au moins un gaz inerte.

Selon le cas, le procédé de l'invention peut comprendre l'une ou plusieurs des caractéristiques suivantes :
- le moyen optique de type multi-focales est choisi parmi les lentilles, les miroirs et leurs combinaisons, de préférence une lentille à bifocales, c'est-à-dire focalisant le faisceau en deux points de focalisation distincts l'un de l'autre. Plus généralement, dans le cas de la présente invention, par moyen optique de type multi-focales, on entend un moyen optique permettant de focaliser le faisceau laser en plusieurs points de focalisation distincts les uns des autres, le plus souvent un premier et un deuxième points de focalisation distincts et situés sur un axe sensiblement co-axial à l'axe de la buse du dispositif laser, c'est-à-dire de la tête laser par laquelle sort le ou les faisceaux laser. Un tel moyen optique et sa mise en oeuvre en coupage laser sont décrits dans le document EP-A-929376.
- la pièce à couper est choisie parmi les plaques, les tôles et les tubes.
- le moyen optique est transparent ou réfléchissant et est choisi parmi les lentilles, les miroirs et leurs combinaisons, de préférence une lentille bifocales.
- la pièce à couper est en acier inoxydable, en acier revêtu, en aluminium ou en alliage d'aluminium, en acier non allié ou en acier allié.
- le gaz inerte est choisi parmi l'azote, l'argon, l'hélium et leurs mélanges, de préférence le gaz inerte est choisi parmi l'azote, l'argon et leurs mélanges.
- le gaz d'assistance contient de 150 ppm en volume à 40% en volume d'hydrogène, de préférence de 0.5 % en volume à 30 % en volume d'hydrogène et le reste étant le gaz inerte.
- le gaz d'assistance est constitué de 5% en volume à 30% en volume d'hydrogène et le reste étant de l'azote.
- l'épaisseur de la pièce à couper est comprise entre 0,2 mm et 20 mm, typiquement entre 0,3 mm et 16 mm.
- la vitesse de coupe est comprise entre 0.5 m/min et 20 m/min.
- le moyen optique est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.
- le gaz d'assistance contient de l'hydrogène en une proportion ajustée en fonction de l'épaisseur et/ou du matériau constitutif de la pièce à couper.

L'invention concerne aussi une installation de coupage par faisceau laser pour la mise en oeuvre d'un procédé selon l'invention comprenant :
- au moins un générateur laser pour générer au moins un faisceau laser,
- au moins une buse de coupage avec au moins un orifice d'entrée de faisceau laser et au moins un orifice de sortie de faisceau laser,
- au moins un moyen optique transparent ou réfléchissant de type multi-focales pour focaliser ledit faisceau laser en plusieurs points de focalisation, et
- au moins une source de gaz d'assistance contenant de l'hydrogène et au moins un gaz inerte dudit faisceau laser alimentant ladite buse en ledit gaz d'assistance.

De façon alternative, l'installation de coupage par faisceau laser pour la mise en oeuvre d'un procédé selon l'invention comprenant :
- au moins un générateur laser pour générer au moins un faisceau laser,
- au moins une buse de coupage avec au moins un orifice d'entrée de faisceau laser et au moins un orifice de sortie de faisceau laser,
- au moins un moyen optique transparent ou réfléchissant de type multi-focales pour focaliser ledit faisceau laser en plusieurs points de focalisation,
- au moins une première source de gaz contenant au moins de l'hydrogène,
- au moins une deuxième source de gaz contenant au moins un gaz inerte, et
- des moyens de mélange de gaz pour mélanger du gaz provenant de la première source de gaz avec du gaz provenant de la deuxième source de gaz de manière à obtenir un gaz d'assistance dudit faisceau laser contenant de l'hydrogène et au moins un gaz inerte, ledit gaz d'assistance alimentant ladite buse.

L'invention repose sur l'utilisation en combinaison, d'une part, d'une ou plusieurs optiques transparentes ou réfléchissantes, tels des lentilles ou des miroirs, permettant d'obtenir plusieurs points de focalisation (PF1, PF2...) distincts du faisceau laser, approximativement dans le même axe et, d'autre part, d'un mélange contenant de l'hydrogène et un ou plusieurs composés gazeux inerte, en particulier l'azote, l'argon ou des mélanges de ces composés, en tant que gaz d'assistance, c'est-à-dire de gaz de coupe.

Une installation de coupage utilisable pour mettre en oeuvre l'invention comprend, par exemple, un générateur laser de type CO₂ pour générer le faisceau laser, une buse de sortie traversée par le faisceau laser, au moins un moyen optique transparent ou réfléchissant pour focaliser ledit faisceau laser et une source de gaz d'assistance du faisceau laser alimentant la buse de sortie en en gaz d'assistance, l'introduction du gaz d'assistance dans la buse se faisant par exemple par un ou plusieurs orifices d'entrée de gaz traversant la paroi périphérique de la buse. Le laser néanmoins peut être de type Nd:YAG.

Selon l'invention, on utilise un laser de 500 à 6 000 W de puissance.

Le moyen optique est de type multi-focales, de préférence une lentille à bifocales, et la source de gaz d'assistance alimente la buse en un mélange gazeux d'assistance contenant de l'hydrogène et au moins un gaz inerte.

Des optiques transparentes ou réfléchissantes de ce type, c'est-à-dire à plusieurs points de focalisation, utilisables dans le cadre de la présente invention sont décrites dans le document EP-A-929376 auquel on pourra se reporter pour plus de détail.

Le principe de fonctionnement d'un moyen optique à multi-focales est schématiquement le suivant.

Un premier point de focalisation PF1 issus de l'angle de convergence le plus grand obtenu avec ledit moyen optique à multi-focales se positionne à proximité de la surface supérieure de la pièce à découper, de préférence en coïncidence avec ladite surface supérieure ou dans l'épaisseur du matériau dans une région voisine de ladite surface supérieure.

Par ailleurs, un deuxième point de focalisation PF2 issus de l'angle de convergence le plus petit obtenu avec ledit moyen optique à multi-focales se positionne à proximité de la surface inférieure de la pièce dans l'épaisseur du matériau ou en dehors de celle-ci.

Ce principe permet, par rapport à l'utilisation d'une optique standard d'utiliser des diamètres de buse inférieurs et donc de diminuer les consommations en gaz car une telle optique standard, c'est-à-dire ayant un seul point de focalisation, implique de positionner son seul point de focalisation, pour lequel l'angle de convergence est le plus grand, à la face inférieure du matériau, voire en dessous et, de ce fait, afin de laisser passer le faisceau laser, il convient d'utiliser des buses de fort diamètre, ce qui augmente d'autant les consommations de gaz.

### Exemples comparatifs

Afin d'illustrer l'invention, des essais comparatifs ont été réalisés et les résultats de ces essais, en termes de vitesse de coupe, sont donnés dans le tableau ci-après.
On a coupé une plaque d'acier inoxydable de 3 mm avec un laser de type CO₂ de 1 500 W de puissance en utilisant soit de l'azote pur (essai 1), soit un mélange gazeux contenant 25 % vol. de H₂ et de l'azote pour le reste, et ce, d'une part, avec une lentille standard (essai 2), c'est-à-dire à un seul point de focalisation, et, d'autre part, avec lentille bifocale (essai 3), toutes les autres conditions opératoires étant égales par ailleurs.

**Tableau comparatif**

| | Essai 1 (art antérieur) | Essai 2 (art antérieur) | Essai 3 (invention) |
|---|---|---|---|
| Gaz de coupe | N₂ pur | N₂ + 25 % H₂ | N₂ + 25% H₂ |
| Optique | lentille mono focale classique | lentille mono focale classique | lentille bi focale |
| Vitesse de coupe | 2,2 m/min | 2,5 m/min | 3,2 m/min |
| Consommation gaz | 15 m³/h | 15 m³/h | 10 m³/h |

Comme on le voit dans le tableau, l'essai 3 selon l'invention conduit à des vitesses de coupe nettement supérieures à celles obtenues avec les procédés classiques (essais 1 et 2) et ce, grâce à l'utilisation en combinaison d'une lentille bifocale et d'un mélange N₂/H₂ dont la teneur en H₂ est judicieusement contrôlée. Il en est de même pour le gain sur la consommation en gaz .

En effet, le procédé de l'invention permet d'augmenter, dans les conditions des essais ci-dessus, de plus 40% la vitesse de coupe par rapport à un procédé utilisant une lentille standard et de l'azote pur (essai 1) et de plus de 20% la vitesse de coupe par rapport à un procédé utilisant une lentille standard et un mélange azote/hydrogène (essai 2).

De plus, il ressort aussi de ces essais que l'essai 3 est celui qui permet de réaliser la plus forte économie de gaz.

La proportion de H₂ à utiliser est contrôlée ou ajustée en fonction de divers paramètres opératoires, telle la nature et/ou l'épaisseur du matériau à couper, notamment dans le but d'éviter la formation de coulures adhérentes en bas de la saignée de coupe et/ou l'oxydation des faces de coupe par de l'oxygène ou de l'air atmosphérique.

Préférentiellement, les teneurs en H₂ sont de 5 % à 30 % en volume, le reste étant de l'azote.

Il est également envisageable d'utiliser de l'argon au lieu de l'azote, ainsi que des mélanges Ar+N₂+H₂.

En résumé, la mise en oeuvre d'un procédé de coupage laser selon l'invention conduit à des vitesses de coupe élevées, c'est-à-dire allant d'environ 0,5 m/min à environ 12 m/min, en fonction des épaisseurs et du matériau à couper, associées à des débits de gaz de coupe réduits, typiquement pas plus de 350 m³/h, et à l'obtention de pièces découpées de qualité élevée et de coût réduit, en particulier avec une source laser de 1800 Watt de puissance par exemple.

## Revendications

1. Procédé de coupage d'une pièce par mise en oeuvre d'un faisceau laser et d'un gaz d'assistance, dans lequel on utilise au moins un moyen optique pour focaliser le faisceau laser en plusieurs points de focalisation distincts l'un de l'autre, et dans lequel on utilise, en tant que gaz d'assistance dudit faisceau laser, un mélange gazeux contenant de l'hydrogène et au moins un gaz inerte.

2. Procédé selon la revendication 1, **caractérisé en ce que** le moyen optique est transparent ou réfléchissant et est choisi parmi les lentilles, les miroirs et leurs combinaisons, de préférence une lentille bifocales.

3. Procédé selon l'une des revendications 1 ou 2, **caractérisé en ce que** la pièce à couper est en acier inoxydable, en acier revêtu, en aluminium ou en alliage d'aluminium, en acier non allié ou en acier allié.

4. Procédé selon l'une des revendications 1 à 3, **caractérisé en ce que** le gaz inerte est choisi parmi l'azote, l'argon, l'hélium et leurs mélanges, de préférence le gaz inerte est choisi parmi l'azote, l'argon et leurs mélanges.

5. Procédé selon l'une des revendications 1 à 4, **caractérisé en ce que** le gaz d'assistance contient de 150 ppm en volume à 40% en volume d'hydrogène, de préférence de 0.5 % en volume à 30 % en volume d'hydrogène et le reste étant le gaz inerte.

6. Procédé selon l'une des revendications 1 à 5, **caractérisé en ce que** le gaz d'assistance est constitué de 5% en volume à 30% en volume d'hydrogène et le reste étant de l'azote.

7. Procédé selon l'une des revendications 1 à 6, **caractérisé en ce que** l'épaisseur de la pièce à couper est comprise entre 0,2 mm et 20 mm, typiquement entre 0,3 mm et 16 mm.

8. Procédé selon l'une des revendications 1 à 7, **caractérisé en ce que** la vitesse de coupe est comprise entre 0.5 m/min et 20 m/min.

9. Procédé selon l'une des revendications 1 à 8, **caractérisé en ce que** le moyen optique est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.

10. Procédé selon l'une des revendications 1 à 9, **caractérisé en ce que** le gaz d'assistance contient de l'hydrogène en une proportion ajustée en fonction de l'épaisseur et/ou du matériau constitutif de la pièce à couper.

11. Installation de coupage par faisceau laser pour la mise en oeuvre d'un procédé selon l'une des revendications 1 à 10, comprenant :
- au moins un générateur laser pour générer au moins un faisceau laser,
- au moins une buse de coupage avec au moins un orifice d'entrée de faisceau laser et au moins un orifice de sortie de faisceau laser,
- au moins un moyen optique transparent ou réfléchissant de type multi-focales pour focaliser ledit faisceau laser en plusieurs points de focalisation, et
- au moins une source de gaz d'assistance contenant de l'hydrogène et au moins un gaz inerte dudit faisceau laser alimentant ladite buse en ledit gaz d'assistance.

12. Installation de coupage par faisceau laser pour la mise en oeuvre d'un procédé selon l'une des revendications 1 à 10, comprenant:
- au moins un générateur laser pour générer au moins un faisceau laser,
- au moins une buse de coupage avec au moins un orifice d'entrée de faisceau laser et au moins un orifice de sortie de faisceau laser,
- au moins un moyen optique transparent ou réfléchissant de type multi-focales pour focaliser ledit faisceau laser en plusieurs points de focalisation,
- au moins une première source de gaz contenant au moins de l'hydrogène,
- au moins une deuxième source de gaz contenant au moins un gaz inerte, et
- des moyens de mélange de gaz pour mélanger du gaz provenant de la première source de gaz avec du gaz provenant de la deuxième source de gaz de manière à obtenir un gaz d'assistance dudit faisceau laser contenant de l'hydrogène et au moins un gaz inerte, ledit gaz d'assistance alimentant ladite buse.
